# FASCICULE DE BREVET EUROPEEN

(11) **EP 3 707 064 B1**
(45) Date de publication et mention de la délivrance du brevet: **01.12.2021**
(21) Numéro de dépôt: 18814672.4
(22) Date de dépôt: 30.10.2018
(51) Int. Cl.: B62D 35/02

(54) **DISPOSITIF DE FIXATION ET DE BLOCAGE SOUS LE CHASSIS D'UN VÉHICULE AUTOMOBILE, DE CARÉNAGES DE FOND ABOUTES EN PROLONGEMENT L'UN DE L'AUTRE**
VORRICHTUNG ZUR BEFESTIGUNG UND IMMOBILISIERUNG VON ANGRENZENDEN UNTERBODENVERKLEIDUNGEN NACHEINANDER UNTER DEM FAHRGESTELL EINES KRAFTFAHRZEUGS
DEVICE FOR ATTACHING AND IMMOBILISING ABUTTING UNDERBODY FAIRINGS IN THE CONTINUATION OF ONE OTHER, UNDER THE CHASSIS OF A MOTOR VEHICLE

(30) Priorité: 06.11.2017 FR 1760381
(43) Date de publication de la demande: 16.09.2020
(73) Titulaire: PSA Automobiles SA, 78300 Poissy (FR)
(72) Inventeur: BERTH, Stéphane, 92320 Chatillon (FR)
(86) Numéro de dépôt international: PCT/FR2018/052686
(87) Numéro de publication internationale: WO 2019/086797

(56) Documents cités:
- EP-A1- 3 199 430
- EP-A2- 1 860 022
- DE-A1-102012 018 487
- FR-A1- 2 987 806

## Description

La présente invention relève du domaine des éléments de fond installés sous une plateforme d'un châssis de véhicule automobile. L'invention relève plus spécifiquement des modalités de fixation et de blocage en position sous la plateforme, d'un jeu de carénages de fond globalement plans disposés en prolongement l'un de l'autre.

Un véhicule automobile comprend un châssis sur lequel sont montés divers équipements du véhicule. Des éléments de fond sont installés sous la caisse du véhicule, en étant montés sous une plateforme du châssis. Parmi de tels éléments de fond, la plateforme soutient des carénages de fond globalement plans qui s'étendent sous la plateforme suivant leur plan général d'extension.

Les carénages de fond forment un bouclier permettant de protéger un ou plusieurs équipements de fond installés sous la plateforme. Les carénages de fond sont aussi classiquement configurés en organes aérodynamiques le long desquels circule l'air lorsque le véhicule est en progression. Les carénages de fond sont ainsi agencés en déflecteurs d'air permettant d'améliorer la stabilité et/ou de réduire la traînée du véhicule. L'agencement des carénages de fond en déflecteurs d'air permet aussi de canaliser l'air s'écoulant sous la caisse, afin de refroidir un ou plusieurs équipements du véhicule.

Les carénages de fond sont fixés de manière robuste à la plateforme, via des organes de fixation qui sont couramment agencés en organes filetés. Plusieurs carénages de fond peuvent être installés sous la plateforme l'un en prolongement de l'autre, pour favoriser l'obtention d'une ligne aérodynamique continue sous le châssis. De dits organes de fixation peuvent alors être exploités pour fixer les carénages de fond conjointement à la plateforme, via leurs bords adjacents placés en recouvrement l'un sur l'autre.

Par ailleurs lorsque le véhicule est en progression, les divers équipements dont il est pourvu sont soumis à des vibrations. Il est alors courant d'utiliser un moyen souple d'amortissement par déformation élastique des mouvements vibratoires auxquelles les équipements sont soumis.

Plus particulièrement en ce qui concerne les carénages de fond, il est connu d'interposer un moyen souple entre un équipement du véhicule, notamment un réservoir à carburant, et un carénage de fond qui le protège. Un tel moyen souple est par exemple formé d'un bloc de mousse ou de masses en élastomère surmoulées sur le carénage de fond, tel qu'il ressort par exemple du document FR 2 932 762 (COMPAGNIE PLASTIC OMNIUM). Le document FR2987806 décrit un dispositif aérodynamique disposé sous le véhicule, comportant un déflecteur disposé derrière un carénage.

Cependant lorsque le véhicule est en progression, la circulation de l'air le long des carénages de fond provoque leur mise en vibration, ce qui a pour effet de générer des nuisances sonores. Plus particulièrement dans le cas où deux carénages de fond sont aboutés en recouvrement l'un sur l'autre via leurs bords adjacents, leur mise en vibration provoque des heurts localisés entre eux qui sont générateurs de bruits.

Il en ressort un besoin de trouver une solution permettant de limiter au mieux les bruits susceptibles d'être générés par suite de la mise en vibration des bords adjacents des carénages de fond placés en contact l'un avec l'autre.

Dans ce contexte, la présente invention a pour objet un dispositif de fixation et de blocage sous une plateforme d'un châssis de véhicule automobile, d'un jeu de carénages de fond aboutés en prolongement l'un de l'autre via leurs bord adjacents placés en recouvrement l'un sur l'autre.

Le but général de l'invention est de limiter les nuisances sonores générées par les vibrations auxquelles les carénages sont soumis sous l'effet de la circulation de l'air le long des carénages lors de la progression du véhicule.

Un but spécifique de l'invention est de rechercher une solution permettant d'éviter au mieux le risque de heurts entre les carénages.

Un autre but spécifique de l'invention est de rechercher une telle solution qui soit pérenne, ou autrement dit qui évite des opérations de maintenance pour rendre durable la solution recherchée.

Un autre but spécifique de l'invention est de rechercher une telle solution en évitant d'accroître l'encombrement des carénages verticalement par rapport à la plateforme, ou autrement dit leur encombrement en élévation perpendiculairement au plan de roulage du véhicule depuis la plateforme.

Un autre but de l'invention est de proposer une telle solution en évitant d'accroître le coût de revient du véhicule dans le contexte d'une concurrence économique notoirement sévère dans le domaine automobile. Il est plus spécifiquement visé de rechercher une telle solution en évitant d'accroître les coûts d'obtention et/ou de montage des carénages sur le châssis du véhicule.

Les buts visés par la présente invention sont atteints, isolément ou en combinaison, par application des dispositions qui suivent.

Le dispositif de la présente invention est un dispositif de fixation et de blocage en position d'un jeu de deux carénages de fond globalement plans sous une plateforme d'un châssis de véhicule automobile. Les carénages sont aboutés l'un en prolongement de l'autre par recouvrement l'un sur l'autre de leurs bords adjacents. Le dispositif comprend des organes de fixation qui traversent conjointement les bords des carénages en recouvrement et qui sont placés en prise sur la plateforme. Il est précisé si besoin que les bords des carénages placés en recouvrement l'un sur l'autre sont par la suite désignés par l'expression "bords des carénages" et/ou "leurs bords", "leurs" étant alors un pronom des carénages.

Dans ce contexte, l'invention est principalement reconnaissable en ce que le dispositif comprend des organes d'appui interposés entre les bords des carénages, en étant répartis le long des bords des carénages entre des zones d'appui vertical des organes de fixation contre les carénages. Les organes d'appui sont structurellement indéformables à l'encontre de l'effort de serrage exercé par les organes de fixation contre les bords des carénages.

Autrement dit, la prise d'appui des organes de fixation contre les carénages forment classiquement un premier moyen de blocage conjoint des carénages en position sous la plateforme, par suite du recouvrement de leurs bords. Les organes d'appui forment un deuxième moyen de blocage des carénages l'un contre l'autre, à l'encontre de leur mobilité relative dans les zones d'extension de leurs bords situées entre lesdites zones d'appui.

Le blocage des carénages contre la plateforme et le blocage des carénages l'un contre l'autre via leurs bords, sont des blocages fermes interdisant une mobilité des carénages par rapport à la plateforme via les organes de fixation et une mobilité relative des bords des carénages l'un par rapport à l'autre via les organes d'appui dans leurs zones d'extension situées entre lesdites zones d'appui.

Ainsi, un débattement localisé des bords des carénages l'un par rapport à l'autre est interdit par les organes d'appui. Un tel débattement est susceptible de résulter de la présence d'un jeu ménagé entre les bords des carénages dans leurs zones d'extension situées entre lesdites zones d'appui, par suite de leur placage l'un contre l'autre et contre la plateforme par les organes de fixation.

Les carénages sont ainsi fermement bloqués en position à leurs bords contre la plateforme, non seulement via les organes de fixation formant le premier moyen de blocage mais aussi via les organes d'appui qui interdisent une mobilité relative des bords des carénages en recouvrement l'un par rapport à l'autre entre lesdites zones d'appui par suite de leur serrage par les organes de fixation.

Le premier moyen de blocage et le deuxième moyen de blocage étant structurellement dissociés, l'interdiction de mouvements relatifs des bords des carénages via les organes d'appui est procurée en limitant le nombre des organes de fixation réservés au montage des carénages sous la plateforme. L'extension en élévation des organes d'appui vers la plateforme peut être limitée audit jeu, en étant sans incidence sur la dimension en élévation des carénages.

Les organes d'appui et lesdites zones d'appui, ou autrement dit les organes d'appui et les organes de fixation, sont de préférence alignés le long des bords des carénages pour limiter l'extension du recouvrement des bords des carénages suivant la direction d'aboutement des carénages en prolongement l'un de l'autre. Selon une variante, les organes d'appui et lesdites zones d'appui peuvent être décalés les uns par rapport aux autres suivant la direction d'aboutement des carénages, en étant par exemple disposés en quinconce le long des bords en recouvrement des carénages.

Les organes d'appui sont plus particulièrement agencés en cales rigides d'entretoisement entre les bords des carénages en recouvrement. Un tel agencement des organes d'appui en entretoises interposées en élévation entre les bords des carénages permet aisément de compenser le dit jeu, et cela sans accroitre significativement le coût d'obtention des carénages. Le surcoût induit par la formation des organes d'appui est limité à l'apport de matière dont ils sont issus pour compenser ledit jeu.

Ainsi selon une forme de réalisation et suivant la direction d'extension en élévation des carénages vers la plateforme, les organes d'appui présentent une dimension égale à un jeu ménagé entre les bords des carénages dans leurs zones d'extension entre lesdites zones d'appui. La dimension en élévation vers la plateforme des organes d'appui est limitée et leur formation sur l'un au moins des bords des carénages est sans incidence sur l'extension en élévation des carénages par rapport à la plateforme.

Le caractère indéformable des organes d'appui est notamment réalisé par leur conformation et/ou par le matériau dont ils sont issus et qui est à fort coefficient de résistance à l'écrasement.

Ainsi selon une forme de réalisation, les organes d'appui sont formés de la matière constitutive de l'un quelconque au moins des carénages dont ils sont issus. La formation des organes d'appui est réalisée à moindres coûts lors d'une même opération de moulage dudit au moins un carénage, ou autrement dit est réalisée simultanément à la formation par moulage dudit au moins un carénage. Dans ce contexte, les organes d'appui sont de préférence ménagés sur le bord d'un seul des carénages.

Selon une variante plus coûteuse, les organes d'appui sont formés par dépôt de matière sur l'un quelconque au moins des bords des carénages en recouvrement. Dans le contexte de l'invention, la matière déposée dont sont issus les organes d'appui est à fort coefficient de résistance à l'écrasement pour conférer aux organes d'appui leur résistance à la déformation.

Selon une forme de réalisation, les organes d'appui et les organes de fixation sont de préférence répartis à équidistance les uns des autres le long des bords des carénages.

Selon une forme de réalisation, au moins un organe d'appui est interposé entre lesdites zones d'appui. En d'autres termes, un ou plusieurs organes d'appui peuvent être ménagés entre lesdites zones d'appui, selon la distance de séparation entre les organes de fixation le long des bords des carénages.

Selon une forme de réalisation, les organes d'appui présentent une surface conformée en arc de cercle dans un plan perpendiculaire à la direction d'aboutement des carénages en prolongement l'un de l'autre.

Autrement dit, les organes d'appui peuvent être conformés en portion de sphère ou en portion de cylindre dont l'axe d'extension est orienté suivant la direction d'aboutement des carénages l'un à l'autre. La prise d'appui des bords des carénages l'un contre l'autre via les organes d'appui en est certifiée et leur blocage l'un contre l'autre via les organes d'appui en est conforté.

Selon une forme de réalisation, les organes d'appui sont chacun de préférence conformés en barrette s'étendant suivant la direction d'aboutement des carénages en prolongement l'un de l'autre. La barrette est notamment de préférence conformée en portion de cylindre dont l'axe d'extension est orienté suivant la direction d'aboutement des carénages.

Selon une forme de réalisation, les organes d'appui sont dans leur ensemble ménagés en relief sur le bord de l'un des carénages, en formant conjointement une assise pour le bord de l'autre carénage. Autrement dit, le bord d'un premier carénage est disposé sous le bord de l'autre deuxième carénage qui est appliqué en contact contre la plateforme. Le bord du premier carénage comporte les organes d'appui qui ménagent conjointement une assise pour le bord du deuxième carénage.

Selon une forme de réalisation, les zones d'appui des organes de fixation contre les bords des carénages sont ménagées par des fûts que comportent les bords des carénages et qui sont emboîtés l'un à l'autre en étant conjointement traversés par au moins un organe de fixation. Les organes d'appui sont alors disposés en contrebas des fûts suivant leur sens d'emboîtement vertical l'un vers l'autre, notamment suivant l'extension en élévation des carénages.

Cette forme de réalisation ne fait pas obstacle à la formation de l'ensemble des organes d'appui sur la face du bord d'un carénage orientée vers le bord de l'autre carénage, ou à la formation des organes d'appui sur les bords de l'un et l'autre des carénages à leurs faces orientées l'une vers l'autre.

L'invention a aussi pour objet un véhicule automobile équipé d'un jeu de carénages de fond disposés, ou en d'autres termes aboutés, en prolongement l'un de l'autre en recouvrement de leurs bords adjacents. Les carénages de fond sont alors fixés sous une plateforme équipant le châssis du véhicule via un dispositif de fixation conforme à l'invention.

On notera que les carénages de fond sont de préférence des carénages avant et arrière disposés en prolongement l'un de l'autre suivant l'extension longitudinale du véhicule d'avant en arrière. Par exemple, les organes d'appui sont ménagés sur le long du bord transversal avant d'un carénage arrière disposé en prolongement d'un carénage avant, dont le bord transversal arrière est abouté au bord transversal avant d'un carénage arrière.

L'invention est aussi potentiellement applicable à la fixation sous la plateforme entre des carénages de fond droit et gauche disposés en prolongement l'un de l'autre suivant l'extension transversale du véhicule.

L'invention est aussi potentiellement applicable à la fixation sous la plateforme entre d'une part de dits carénages avant et arrière d'un premier jeu de carénages de fond, et d'autre part entre de dits carénages droit et gauche d'un deuxième jeu de carénages de fond comprenant l'un quelconque des carénages du premier jeu de carénages.

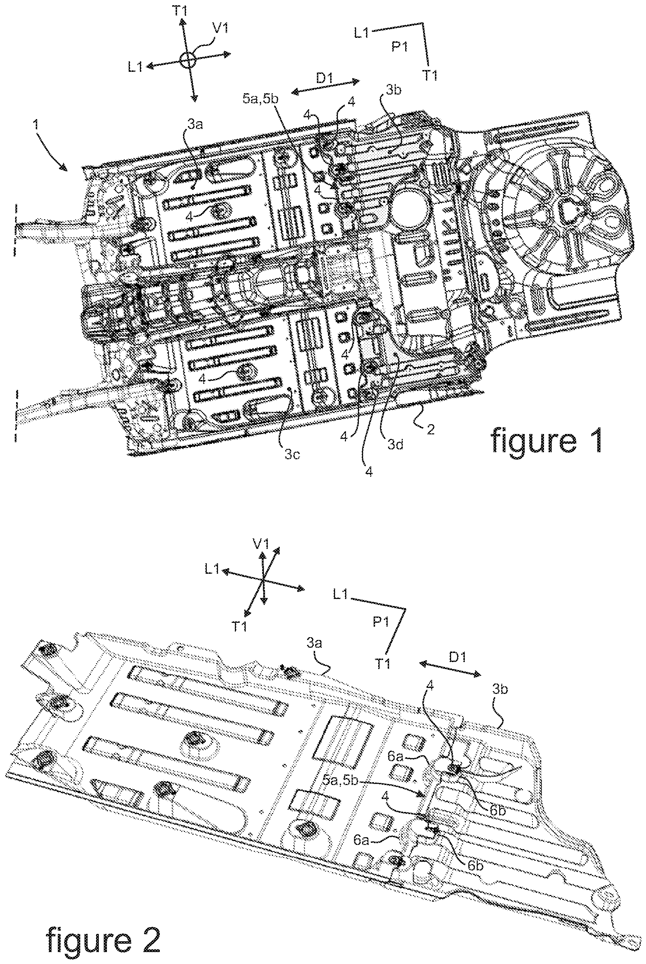

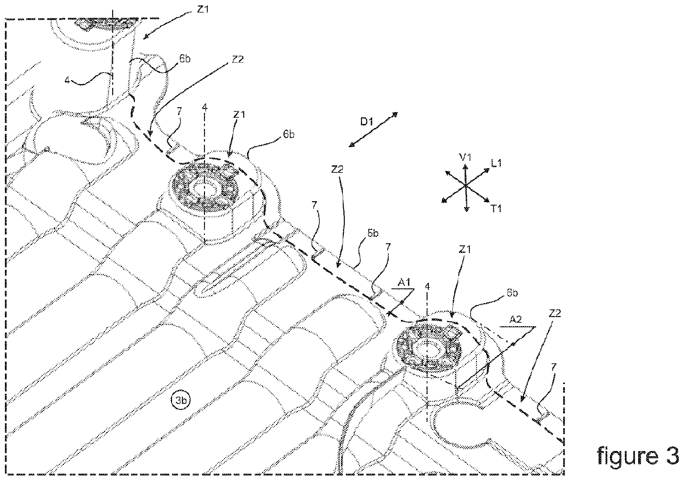

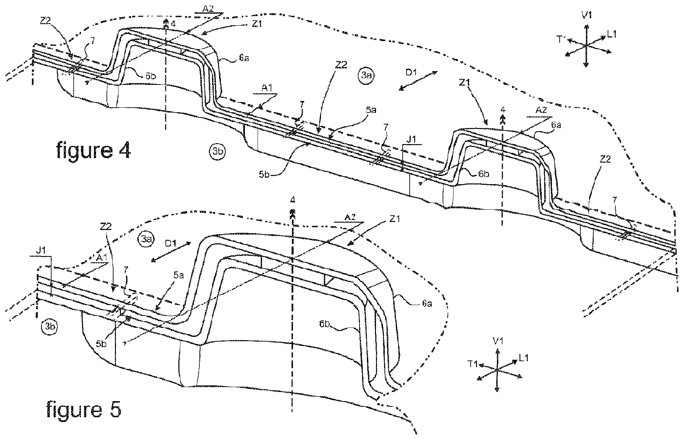

Un exemple de réalisation de la présente invention va être décrit en relation avec les figures des planches annexées, dans lesquelles :
-) la figure 1 est une illustration de dessous d'un châssis de véhicule automobile équipé de carénages de fond selon un exemple de réalisation de l'invention.
-) la figure 2 est une illustration en perspective de dessous d'un jeu de carénages de fond avant et arrière équipant le châssis représenté sur la figure 1.
-) la figure 3 est une illustration partielle d'un carénage de fond représenté sur les figures 1 et 2, muni d'organes d'appui selon un exemple de réalisation de l'invention.
-) la figure 4 est une illustration partielle en perspective du jeu de carénages de fond représentés sur la figure 2 en position d'assemblage l'un à l'autre,
-) la figure 5 est un détail agrandi de la figure 4.

Les figures et leurs descriptions détaillées exposent l'invention selon des modalités particulières qui ne sont pas restrictives quant à la portée de l'invention telle que définie par les revendications. Les figures et leurs descriptions détaillées peuvent servir à mieux définir l'invention, si besoin en relation avec la description générale qui vient d'en être faite.

Sur la figure 1, un châssis 1 d'un véhicule automobile comprend une plateforme 2 montée sur une ossature du châssis 1. La plateforme 2 est susceptible d'être composée de plusieurs panneaux et permet par exemple d'installer sur le châssis 1 divers équipements de fond du véhicule, tel qu'un réservoir à carburant par exemple.

Des carénages 3a-3d de fond globalement plans sont installés sous la plateforme 2, en s'étendant suivant la direction longitudinale L1 et la direction transversale T1 d'extension du châssis 1. Les carénages 3a-3d forment des boucliers de protection des équipements de fond du véhicule, et sont configurés en déflecteurs d'air permettant d'améliorer la stabilité du véhicule et/ou de canaliser l'air s'écoulant sous le châssis 1 lorsque le véhicule est en progression.

Les carénages 3a-3d s'étendent en élévation suivant une direction verticale V1 perpendiculaire à leur plan L1-T1 d'extension et typiquement considérée perpendiculairement au plan P1 de roulage du châssis 1. Selon l'exemple illustré, les carénages 3a-3d sont au nombre de quatre répartis par jeux de deux carénages. Plus particulièrement, des jeux de carénages respectivement droit et gauche comprennent chacun un carénage avant 3a, 3c et un carénage arrière 3b, 3d.

Pour chacun des jeux de carénages 3a, 3b et 3c, 3d, le carénage avant 3a, 3c et le carénage arrière 3b, 3d sont disposés en prolongement l'un de l'autre suivant une direction d'aboutement D1 des carénages 3a, 3b et 3c, 3d qui est orientée suivant l'extension longitudinale L1 du châssis.

Les carénages 3a-3d sont fixés à la plateforme 2 suivant leur plan L1-T1 via une pluralité d'organes de fixation 4, (dont seulement quelques-uns sont référencés pour éviter d'alourdir les figures). Les organes de fixation 4 sont répartis sur les carénages 3a-3d en étant orientés verticalement V1, pour procurer un plaquage des carénages 3a-3d contre la face inférieure de la plateforme 2. De tels organes de fixation 4 sont notamment agencés en organes filetés, tels que par exemple des goujons ou des boulons.

Il est si besoin précisé certaines notions relatives qui sont communément admises dans le domaine automobile pour décrire un véhicule automobile et/ou ses composants. La notion d'extension longitudinale L1 du véhicule est typiquement considérée entre l'avant et l'arrière du véhicule. Les notions avant et arrière sont des notions relatives classiquement identifiées selon la station du conducteur à bord du véhicule, qui fait face à la direction d'avancement vers l'avant du véhicule. Les notions transversal T1 et vertical V1 sont appréciées perpendiculairement entre elles et à la notion de longitudinal L1.

Le véhicule s'étend verticalement V1, ou autrement dit en élévation, perpendiculairement à son plan de roulage au sol P1. Par suite, les notions dessus et dessous ou sous, ou autres notions apparentées, sont des notions relatives considérées au regard de la notion de verticalité V1 ou en d'autres termes la notion d'élévation V1. Les notions latéral et/ou côté, ou autres notions apparentées, sont des notions relatives considérées au regard de la notion de transversalité T1. Les notions droit et gauche sont des notions relatives considérées au regard de la notion de transversalité T1 par rapport à la position du conducteur qui fait face vers l'avant du véhicule.

Sur la figure 2 et sur les figures 4 et 5, un jeu de carénages comprend un carénage avant 3a et un carénage arrière 3b qui sont aboutés en prolongement l'un de l'autre suivant ladite direction d'aboutement D1, comme illustré sur la figure 1. Les bords adjacents 5a, 5b des carénages 3a, 3b sont placés en recouvrement l'un sur l'autre.

Les carénages 3a-3b comprennent des fûts 6a, 6b pour leur fixation conjointe sous la plateforme 2 via leurs bords 5a, 5b adjacents placés en recouvrement l'un sur l'autre. Une telle fixation est réalisée au moyen de dits organes de fixation 4 qui sont schématisés en traits interrompus sur les figures. Les fûts 6a, 6b sont verticalement V1 emboîtés l'un à l'autre pour être conjointement traversés par les organes de fixation 4.

Cependant par suite de la fixation conjointe des carénages 3a, 3b en appui sous la plateforme 2, un jeu J1 est potentiellement ménagé entre leurs bords adjacents 5a, 5b, comme illustré sur les figures 4 et 5. Un tel jeu J1 est notamment localisé entre les bords 5a, 5b adjacents des carénages 3a, 3b dans leurs zones d'extension Z2 s'étendant transversalement T1 entre les zones d'appui Z1 vertical V1 des organes de fixation 4 contre les carénages 3a, 3b via les fûts 6a, 6b qu'ils comportent respectivement.

Il est compris que la prise d'appui des organes de fixation 4 contre l'un et l'autre des bords 5a, 5b des carénages 3a, 3b dans lesdites zones d'appui Z1 vertical, est réalisée successivement de l'un à l'autre des bords 5a, 5b des carénages 3a, 3b en raison de leur recouvrement. De fait, lesdites zones d'appui Z1 sont aussi par voie de conséquence des zones d'appui Z1 vertical des carénages 3a, 3b sous la plateforme 2. Les dites zones d'extension Z2 sont des zones d'interposition que comprennent les bords 5a, 5b des carénages 3a, 3b transversalement entre lesdites zones d'appui Z1. Lesdites zones d'extension Z2, ou autrement dit d'interposition, sont globalement planes et sont de faible extension suivant la direction d'aboutement D1 des carénages 3a, 3b.

Comme délimitées pour exemple en traits interrompus sur les figures 3 à 5, lesdites zones d'extension Z2, ou zone d'interposition Z2, s'étendent suivant la direction d'aboutement D1 des carénages 3a, 3b en lisière de la tranche extérieure des bords 5a, 5b adjacents des carénages 3a, 3b. Suivant la direction d'aboutement D1 des carénages 3a, 3b, la dimension A1 d'extension des dites zones d'interposition Z2 est significativement inférieure à celle A2 desdites zones d'appui Z1, notamment ménagées par les fûts 6a, 6b.

Ledit jeu J1 est susceptible d'autoriser localement dans les différentes dites zones d'extension Z2 une mobilité relative des bords 5a, 5b des carénages 3a, 3b l'un vers l'autre, notamment par battements localisés. De tels battements sont susceptibles d'être provoqués sous l'effet de l'écoulement de l'air le long des carénages 3a, 3b lorsque le véhicule est en progression. Dans ce cas, des heurts entre les bords 5a, 5b des carénages 3a, 3b peuvent être provoqués dans les dites zones d'extension Z2. De tels heurts sont générateurs de bruits et donc de nuisances sonores.

Pour limiter voire interdire de tels battements entre les bords 5a, 5b des carénages dans leurs zones d'extension Z2 entre les zones d'appui Z1, le bord 5a, 5b de l'un au moins des carénages 3a, 3b est pourvu d'organes d'appui 7 contre lesquels le bord 5a, 5b de l'autre carénage 3a, 3b prend appui. Selon l'exemple illustré, le bord 5b du carénage arrière 3b est pourvu de tels organes d'appui 7 contre lesquels le bord 5a du carénage avant 3a prend appui.

Les organes d'appui 7 sont agencés en cales rigides, ou autrement dit en taquet, s'étendant verticalement V1 suivant une dimension sensiblement égale au jeu J1 ménagé entre les bords 5a, 5b des carénages 3a, 3b dans leurs zones d'extension Z2 s'étendant entre les zones d'appui Z1. De telles cales forment des entretoises de séparation verticale V1 entre les bords 5a, 5b des carénages 3a, 3b, qui permettent de les maintenir à distance l'un de l'autre dans leurs zones d'extension Z2 s'étendant entre lesdites zones d'appui Z1.

Les organes d'appui 7 formés en saillie verticale V1 sur l'un des carénages, notamment le carénage arrière 3b sur l'exemple illustré, ménagent conjointement une assise contre laquelle est appliqué le bord 5a de l'autre carénage, notamment le carénage avant 3a sur l'exemple illustré, dans ses zones d'extension Z2 s'étendant entre ses zones d'appui Z1.

Par suite du serrage des bords 5a, 5b des carénages 3a, 3b conjointement contre la plateforme 2 via les organes de fixation 4, les bords 5a, 5b des carénages 3a, 3b sont plaqués l'un contre l'autre dans lesdites zones d'appui Z1 et sont fixés conjointement à la plateforme 2. Les bords 5a, 5b des carénages 3a, 3b sont aussi bloqués fermement l'un contre l'autre via les organes d'appui 7, dans leurs zones d'extension Z2 s'étendant entre leurs zones d'appui Z1, qui sont matérialisées par les fûts 6a, 6b sur l'exemple illustré.

Autrement dit, le dispositif de l'invention procure une fixation et un blocage ferme des bords 5a, 5b des carénages 3a, 3b en butée l'un contre l'autre et conjointement contre la plateforme 2, via les organes de fixation 4 dans les zones d'appui Z1, et via les organes d'appui 7 dans les zones d'extension Z2 des bords 5a, 5b des carénages qui s'étendent en interposition transversale T1 entre les zones d'appui Z1.

Comme illustré, les organes d'appui 7 et organes de fixation 4 sont de préférence répartis transversalement T1 à équidistance les uns des autres le long des bords 5a, 5b des carénages 3a, 3b. Ceci a pour effet de répartir équitablement les efforts de blocage des bords 5a, 5b des carénages 3a, 3b l'un contre l'autre via les organes d'appui 7 et via les organes de fixation 4.

Les organes d'appui 7 disposés entre deux zones d'appui Z1 sont en nombre déterminé selon l'extension des zones d'extension Z2 des bords 5a, 5b des carénages 3a, 3b qui les reçoivent et selon l'ampleur du jeu J1 à compenser, de manière à interdire des heurts entre les bords 5a, 5b des carénages 3a, 3b.

Les organes d'appui 7 sont de préférence agencés en barrettes orientées suivant la direction d'aboutement D1 des carénages 3a, 3b. Suivant la direction d'aboutement D1, les barrettes ou autrement dit les organes d'appui 7 sont d'une dimension sensiblement égale à celle A1 desdites zones d'extension Z2 recevant les organes d'appui 7 et s'étendant en interposition entre lesdites zones d'appui Z1.

Les barrettes, ou autrement dit les organes d'appui 7, présentent un profil transversal-vertical T1-V1 configuré en arc de cercle à leur sommet. Le sommet des organes d'appui 7 est bien entendu situé verticalement V1 à l'opposé de leur base d'ancrage sur l'un au moins des carénages 3a, 3b, notamment le carénage arrière 3b sur l'exemple illustré.

L'ancrage des organes d'appui 7 au carénage arrière 3b est réalisé par moulage des organes d'appui 7 conjointement au moulage du carénage arrière 3b en une même opération de moulage. Les organes d'appui 7 sont ainsi formés d'une masse issue de la matière du carénage arrière 3b, qui est typiquement robuste et qui confère aux organes d'appui 7 leur rigidité et leur robustesse à la déformation.

Une telle robustesse des organes d'appui 7 leur confère une indéformabilité apte à maintenir les bords 5a, 5b des carénages 3a, 3b bloqués l'un contre l'autre en superposition verticale V1 dans lesdites zones d'extension Z2. La robustesse des organes d'appui 7 permet aussi de les maintenir en conformation à l'encontre des efforts de serrage des carénages 3a, 3b contre la plateforme 2 via les organes de fixation 4, notamment suivant leur extension verticale V1, pour compenser de manière pérenne le jeu J1 entre les bords 5a, 5b des carénages 3a, 3b.

## Revendications

1. Dispositif de fixation et de blocage en position d'un jeu de deux carénages (3a, 3b) de fond globalement plans (L1-T1) sous une plateforme (2) d'un châssis (1) de véhicule automobile, les carénages (3a, 3b) étant aboutés l'un en prolongement de l'autre par recouvrement l'un sur l'autre de leurs bords (5a, 5b) adjacents, le dispositif comprenant des organes de fixation (4) qui traversent conjointement les bords (5a, 5b) des carénages (3a, 3b) en recouvrement et qui sont placés en prise sur la plateforme (2), **caractérisé en ce que** le dispositif comprend des organes d'appui (7) interposés entre les bords (5a, 5b) des carénages (3a, 3b) en étant répartis le long des bords (5a, 5b) des carénages 3a, 3b) entre des zones d'appui (Z1) vertical (V1) des organes de fixation (4) contre les carénages (3a, 3b), les organes d'appui (7) étant structurellement indéformables à l'encontre de l'effort de serrage exercé par les organes de fixation (4) contre les bords (5a, 5b) des carénages (3a, 3b).

2. Dispositif selon la revendication 1, **caractérisé en ce que** les organes d'appui (7) sont agencés en cales rigides d'entretoisement entre les bords (5a, 5b) des carénages (3a, 3b) en recouvrement.

3. Dispositif selon l'une quelconque des revendications 1 à 2, **caractérisé en ce que** suivant la direction (V1) d'extension en élévation des carénages (3a, 3b) vers la plateforme (2), les organes d'appui (7) présentent une dimension égale à un jeu (J1) ménagé entre les bords (5a, 5b) des carénages (3a, 3b) dans leurs zones d'extension (Z2) entre lesdites zones d'appui (Z1).

4. Dispositif selon l'une quelconque des revendications 1 à 3, **caractérisé en ce que** les organes d'appui (7) sont formés de la matière constitutive de l'un quelconque au moins des carénages (3a, 3b) dont ils sont issus.

5. Dispositif selon l'une quelconque des revendications 1 à 4, **caractérisé en ce que** les organes d'appui (7) et les organes de fixation (7) sont répartis à équidistance les uns des autres le long des bords (5a, 5b) des carénages (3a, 3b).

6. Dispositif selon l'une quelconque des revendications 1 à 5, **caractérisé en ce qu'**au moins un organe d'appui (7) est interposé entre lesdites zones d'appui (Z1).

7. Dispositif selon l'une quelconque des revendications 1 à 6, **caractérisé en ce que** les organes d'appui (7) présentent une surface conformée en arc de cercle dans un plan (T1-V1) perpendiculaire à la direction d'aboutement (D1) des carénages (3a, 3b) en prolongement l'un de l'autre.

8. Dispositif selon l'une quelconque des revendications 1 à 7, **caractérisé en ce que** les organes d'appui (7) sont chacun conformés en barrette s'étendant suivant la direction d'aboutement (D1) des carénages (3a, 3b) en prolongement l'un de l'autre.

9. Dispositif selon l'une quelconque des revendications 1 à 8, **caractérisé en ce que** les organes d'appui (7) sont dans leur ensemble ménagés en relief sur le bord (5a, 5b) de l'un des carénages (3a, 3b) en formant conjointement une assise pour le bord (5a, 5b) de l'autre carénage (3a,3b).

10. Dispositif selon l'une quelconque des revendications 1 à 9, **caractérisé en ce que** les zones d'appui (Z1) des organes de fixation (7) contre les bords (5a, 5b) des carénages (3a, 3b) sont ménagées par des fûts (6a, 6b) que comportent les bords (5a, 5b) des carénages (3a, 3b) et qui sont emboîtés l'un à l'autre en étant conjointement traversés par au moins un organe de fixation (4), les organes d'appui (7) étant disposés en contrebas des fûts (6a, 6b) suivant leur sens d'emboîtement vertical (V1) l'un vers l'autre.

## Patentansprüche

1. Vorrichtung zum Befestigen und Fixieren in der Position eines Satzes von zwei im Wesentlichen ebenen Bodenverkleidungen (3a, 3b) (L1-T1) unter einer Plattform (2) eines Kraftfahrzeugrahmens (1), wobei die Verkleidungen (3a, 3b) durch Überlappung ihrer benachbarten Ränder (5a, 5b) aneinander anstoßen, wobei die Vorrichtung Befestigungsorgane (4) umfasst, die gemeinsam die Ränder (5a, 5b) der überlappenden Verkleidungen (3a, 3b) durchsetzen und an der Plattform (2) angreifen **dadurch gekennzeichnet, dass** die Vorrichtung Stützorgane (7) umfasst, die zwischen den Rändern (5a, 5b) der Verkleidungen (3a, 3b) angeordnet und entlang der Ränder (5a, 5b) der Verkleidungen (3a, 3b) zwischen vertikalen Stützzonen (Z1) der Befestigungsorgane (4) gegen die Verkleidungen (3a, 3b) verteilt sind, wobei die Stützorgane (7) gegen die Klemmkraft, die von den Befestigungsorganen (4) gegen die Ränder (5a, 5b) der Verkleidungen (3a) ausgeübt wird, strukturell unverformbar sind 3b.

2. Vorrichtung nach Anspruch 1, **dadurch gekennzeichnet, dass** die Stützorgane (7) als starre Abstandskeile zwischen den Rändern (5a, 5b) der überlappenden Verkleidungen (3a, 3b) angeordnet sind.

3. Vorrichtung nach einem der Ansprüche 1 bis 2, **dadurch gekennzeichnet, dass** in der Richtung (V1) der Ausdehnung der Verkleidungen (3a, 3b) in Richtung der Plattform (2) in der Höhe die Stützorgane (7) eine Abmessung aufweisen, die gleich einem Spiel (J1) ist, das zwischen den Rändern (5a, 5b) der Verkleidungen (3a, 3b) in ihren Erweiterungsbereichen (Z2) zwischen den Stützbereichen (Z1) ausgebildet ist.

4. Vorrichtung nach einem der Ansprüche 1 bis 3, **dadurch gekennzeichnet, dass** die Stützorgane (7) aus dem Material gebildet sind, das wenigstens eine der Verkleidungen (3a, 3b) bildet, aus denen sie stammen.

5. Vorrichtung nach einem der Ansprüche 1 bis 4, **dadurch gekennzeichnet, dass** die Stützorgane (7) und die Befestigungsorgane (7) in gleichem Abstand voneinander entlang der Ränder (5a, 5b) der Verkleidungen (3a, 3b) verteilt sind.

6. Vorrichtung nach einem der Ansprüche 1 bis 5, **dadurch gekennzeichnet, dass** mindestens ein Stützorgan (7) zwischen den Stützzonen (Z1) angeordnet ist.

7. Vorrichtung nach einem der Ansprüche 1 bis 6, **dadurch gekennzeichnet, dass** die Stützorgane (7) eine kreisbogenförmige Oberfläche in einer Ebene (T1-V1) senkrecht zur Stoßrichtung (D1) der Verkleidungen (3a, 3b) in Verlängerung zueinander aufweisen.

8. Vorrichtung nach einem der Ansprüche 1 bis 7, **dadurch gekennzeichnet, dass** die Stützorgane (7) jeweils als in Anstoßrichtung (D1) der Verkleidungen (3a, 3b) in Verlängerung zueinander verlaufende Stege ausgebildet sind.

9. Vorrichtung nach einem der Ansprüche 1 bis 8, **dadurch gekennzeichnet, dass** die Stützorgane (7) in ihrer Gesamtheit am Rand (5a, 5b) einer der Verkleidungen (3a, 3b) unter Bildung einer gemeinsamen Sitzfläche für den Rand (5a, 5b) der anderen Verkleidung (3a, 3b) erhabene Ausformungen aufweisen.

10. Vorrichtung nach einem der Ansprüche 1 bis 9, **dadurch gekennzeichnet, dass** die Auflagebereiche (Z1) der Befestigungsorgane (7) an den Rändern (5a, 5b) der Verkleidungen (3a, 3b) von Fässern (6a, 6b) gebildet sind, die die Ränder (5a, 5b) der Verkleidungen (3a, 3b) aufweisen und die ineinander gesteckt sind, wobei sie gemeinsam von mindestens einem Befestigungsorgan (4) durchquert werden, wobei die Auflageorgane (7) unterhalb der Fässer (6a, 6b) angeordnet sind Vertikale Steckrichtung (V1) zueinander.

## Claims

1. Fixing and locking device in position of a set of two generally planar bottom shrouds (3a, 3b) (L1-T1) under a platform (2) of a motor vehicle chassis (1), the shrouds (3a, 3b) being abutted in an extension of the other by covering each other with adjacent edges (5a, 5b) the device comprises fixing members (4) which cross the edges (5a, 5b) of the overlapping shrouds (3a, 3b) and which are engaged on the platform (2), **characterized in that** the device comprises supporting members (7) which are interposed between the edges (5a, 5b) of the shrouds (3a, 3b) by being distributed along the edges (5a, 5b) (b) shrouds 3a, 3b) between vertical support areas (Z1) (V1) of the fixing members (4) against the shrouds (3a, 3b), the supporting members (7) being structurally deformable against the clamping force exerted by the fixing members (4) against the edges (5a, 5b) of the shrouds (3a, 3b).

2. Device according to Claim 1, **characterized in that** the support members (7) are arranged in rigid wedges for spacing between the edges (5a, 5b) of the overlapping shafts (3a, 3b).

3. Device according to any one of Claims 1 to 2, **characterized in that** in the direction (V1) of upward expansion of the shrouds (3a, 3b) towards the platform (2), the support members (7) have a dimension equal to a set (J1) provided between the edges (5a, 5b) of the shrouds (3a, 3b) in their extension areas (Z) (2) between said support areas (Z1).

4. Device according to one of Claims 1 to 3, **characterized in that** the support members (7) are formed of the constituent material of at least one of the shrouds (3a, 3b) from which they are derived.

5. Device according to one of Claims 1 to 4, **characterized in that** the support members (7) and the fixing members (7) are distributed in equidistance along the edges (5a, 5b) of the shrouds (3a, 3b).

6. Device according to one of Claims 1 to 5, **characterized in that** at least one support member (7) is interposed between said support areas (Z1).

7. Device according to any one of Claims 1 to 6, **characterized in that** the support members (7) have a shaped arcuate surface in a plane (T1-V1) perpendicular to the direction of abutment (D1) of the shrouds (3a, 3b) extending from one another.

8. Device according to any one of Claims 1 to 7, **characterized in that** the support members (7) are each shaped in a strip extending in the direction of abutment (D1) of the shrouds (3a, 3b) in an extension of one another.

9. Device according to any one of Claims 1 to 8, **characterized in that** the support members (7) are in their assembly made in relief on the edge (5a, 5b) of one of the shrouds (3a, 3b) by jointly forming a seat for the edge (5a, 5b) of the other shroud (3a, 3b).

10. Device according to any one of Claims 1 to 9, **characterized in that** the bearing areas (Z1) of the fixing members (7) against the edges (5a, 5b) of the shrouds (3a, 3b) are provided with barrels (6a, 6b) which are formed by the edges (5a, 5b) of the shrouds (3a, 3b) one to the other by being jointly traversed by at least one fixing member (4), the supporting members (7) being arranged below the drums (6a, 6b) in accordance with their direction of vertical interlocking (V1) towards each other.
